# EUROPEAN PATENT SPECIFICATION

(11) **EP 4 117 446 B1**
(45) Date of publication and mention of the grant of the patent: **09.04.2025**
(21) Application number: 21717271.7
(22) Date of filing: 11.03.2021
(51) Int. Cl.: A23D 7/005, A23D 7/01

(54) **A COMPOSITION COMPRISING DOCOSAHEXAENOIC ACID AND EGG YOLK SUITABLE FOR SICKLE CELL DISEASE TREATMENT**
ZUSAMMENSETZUNG MIT DOCOSAHEXAENSÄURE UND EIGELB ZUR BEHANDLUNG VON SICHELZELLANÄMIE
COMPOSITION COMPRENANT DE L'ACIDE DOCOSAHEXAÉNOÏQUE ET DU JAUNE D'OEUF APPROPRIÉE POUR LE TRAITEMENT DE LA DRÉPANOCYTOSE

(30) Priority: 12.03.2020 EP 20162635
(43) Date of publication of application: 18.01.2023
(73) Proprietor: Sancilio, Fred D., Stuart, FL 34997 (US)
(72) Inventor: Sancilio, Fred D., Stuart, FL 34997 (US)
(74) Representative: Hertin und Partner Rechts- und Patentanwälte PartG mbB
(86) International application number: PCT/US2021/021879
(87) International publication number: WO 2021/183749

(56) References cited:
- JP-A- H06 237 734
- US-A- 4 913 921
- US-A- 5 346 709
- US-A1- 2014 106 047
- US-A1- 2017 258 752
- US-B1- 6 235 331
- HONOLD PHILIPP J ET AL: "Potential seaweed-based food ingredients to inhibit lipid oxidation in fish-oil-enriched mayonnaise", EUROPEAN FOOD RESEARCH AND TECHNOLOGY, SPRINGER BERLIN HEIDELBERG, BERLIN/HEIDELBERG, vol. 242, no. 4, 10 October 2015 (2015-10-10), pages 571 - 584, XP035868087, ISSN: 1438-2377, [retrieved on 20151010], DOI: 10.1007/S00217-015-2567-Y

## Description

The invention relates to a composition, comprising fatty acids, egg yolk and an acidic aqueous medium, wherein the composition comprises 30-80 percent docosahexaenoic acid (DHA) by weight (30-80 wt%).

The invention is also as defined in dependent claims 2 to 14.

The invention also relates to a process for the preparation of a composition according to the invention, comprising:
a. forming an oil-in-water emulsion comprising at least DHA at 30-80 wt%, egg yolk and acidic aqueous medium, in an amount sufficient to provide a mayonnaise-type emulsion or paste; and
b. completely filling said emulsion into a container of an airtight material.

The invention therefore relates to an oil in water emulsion, such as a mayonnaise, paste or having a mayonnaise-like consistency, for example suitable to be pressed or squeezed from a flexible container or tube. The invention further relates to the composition for use in treating disease in which DHA is deficient, for example sickle cell disease.

### BACKGROUND OF THE INVENTION

Health benefits of omega-3 fatty acids and their esters (n-3 fatty acids) are well-established. However, consumption of adequate dietary sources of these fatty acids is inadequate. Oral fish oil supplements are an alternative means of consuming adequate long-chain n-3 fatty acids in individuals who cannot consume sufficient dietary sources. However, palatability can present a problem with compliance.

Cod-liver oil and other fish oils have been known and used for many years as a valuable preparation due to its vitamin contents and has recently awakened new interest due to its high content of polyunsaturated fatty acid esters (including triglycerides). Newly produced cod-liver oil and other fish oils have a bland taste which remains unchanged as long as it is not exposed to oxidation. The most common way of distributing cod-liver oil and other fish oils have, up to now, been by using bottles. Daily use allows entry of air into the bottle with resulting oxidation and rancid taste. Gelatin capsules are also used, but this increases product cost considerably and compliance, especially in children, is low.

Cod-liver oil and other fish oils have been manufactured as an emulsion but mainly as a pharmacy product made to order and only with a view to improving the taste of the cod-liver oil. It was sold in bottles and had a thin consistency. Such emulsions are very vulnerable to oxidation and have therefore not been the subject of commercialization.

In an effort to improve formulations, compositions have been developed using micelles, based on synthetic surfactants. For example, WO2013148136 describes compositions comprising at least one Omega-3 fatty acid ester and at least one surface active agent, wherein the compositions form micelles when in contact with an aqueous medium.

Reports have also been issued that emulsified fish oil would have an increased rate and extent of absorption compared with the capsular triglyceride fish oil (Raatz et al, J Am Diet Assoc. 2009;109:1076-1081). Despite these early reports, the formulation of such fish oil emulsions was difficult due to oxidation and poor taste, representing serious impediments to commercialization.

Emulsifying fish oil allows for production of a more pleasant-tasting supplement and can enhance digestion and absorption of the fatty acids. Egg yolk has also been used in the past to emulsify cod-liver oil, providing mayonnaise-like emulsion (US 5,346,709), although DHA was not present in the composition at sufficient quantities.

JP H06 237734 teaches a food composition for hypofunctional diseases.

US 5 346 709 discloses a process for the production of a marine oil preparation.

US 2014/106047 teaches prepared foods having high efficacy omega-6/omega-3 balanced polyunsaturated fatty acids.

US 2017/258752 discloses self-micellizing fatty acids and fatty acid ester compositions and their use in the treatment of disease states.

US 6 235 331 teaches modified fish oil type material containing highly unsaturated fatty acid and/or esters thereof, and a composition containing said material.

US 4 913 921 discloses food products containing fish oils stabilized with fructose.

HONOLD PHILIPP et al, "Potential seaweed-based food ingredients to inhibit lipid oxidation in fish-oil-enriched mayonnaise", Eur Food Res Technol, 10 October 2015, 242:571-584, teaches potential seaweed-based food ingredients to inhibit lipid oxidation in fish-oil-enriched mayonnaise.

Nevertheless, there is a need in the art to provide alternative or improved compositions for omega-3 fatty acids, especially DHA, that enable higher compliance rates, for example by more palatable compositions with not only improved taste but also bioavailability, allowing sufficient omega-3 fatty acids, especially DHA, to be effectively administered.

### SUMMARY OF THE INVENTION

In light of the prior art, the technical problem underlying the invention was the provision of improved or alternative means for administering omega-3 fatty acids, especially DHA. Another technical problem underlying the invention was the provision of an omega-3 fatty acid preparation in which the taste is masked or eliminated. A technical problem underlying the invention was to produce a preparation with properties similar to that of mayonnaise. A further technical problem of the invention can be considered the provision of alternative or improved means for treatment of a medical condition associated with pathologically low DHA levels, such as for the treatment of metabolic disease or a membranopathy, for example for the treatment of sickle cell disease, preferably in a pediatric subject. In providing a solution to these problems, the invention seeks to avoid the disadvantages of the prior art.

This problem is solved by the features of the independent claims. Preferred embodiments of the present invention are provided by the dependent claims.

The invention therefore relates to the embodiments and aspects described in the claims herein. Further embodiments are presented in the description.

The invention relates to a composition, comprising fatty acids, egg yolk and an acidic aqueous medium, wherein the composition comprises 30-80 percent docosahexaenoic acid (DHA) by weight (30-80 wt%).

The invention is also as defined in dependent claims 2 to 14.

The invention also relates to a process for the preparation of a composition according to the invention, comprising:
a. forming an oil-in-water emulsion comprising at least DHA at 30-80 wt%, egg yolk and acidic aqueous medium, in an amount sufficient to provide a mayonnaise-type emulsion or paste; and
b. completely filling said emulsion into a container of an airtight material.

Disclosed herein is a composition, comprising fatty acids, egg yolk and an acidic aqueous medium, wherein the composition comprises at least 20 percent DHA by weight (20 wt%).

The composition described herein is intended for use in treating an inborn error of metabolism (as for example: sickle cell disease) or a membranopathy (an imbalanced state that a cell membrane is in which is abnormal and leads to various disease states including diabetes, high blood fats, cardiovascular disease and stroke).

The invention relates in preferred embodiments to a mayonnaise or mayonnaise-like formula or paste to allow the delivery of a super-bioavailable polyunsaturated fatty acid, specifically absent in certain diseases that are the result of either a genetic predisposition of an individual or the result of a nutritional deficiency.

The present invention is advantageous, as the composition allows a natural product and can avoid chemicals like synthetic surfactants, which have been previously employed in manufacturing emulsions using omega-3 fatty acids and their esters. In one embodiment, the composition is essentially free of synthetic surfactants.

The absence of synthetic surfactants in the present invention leads to multiple surprising benefits in comparison to those compositions comprising surfactants, such as in WO2013148136. The high levels of synthetic surfactants employed in the compositions of the prior art enabled the formation of micelles and good bioavailability of the omega-3 fatty acids. However, due to the high levels of synthetic surfactants, clinical regulatory approval is necessary and potential toxicity is certainly an issue before being able to administer such compositions, in particular to children. It was surprising that egg yolk, combined with the relatively large amounts of DHA, as in the compositions of the present invention, enabled an oil-in-water emulsion with excellent DHA bioavailability that avoids the disadvantages (potentially toxicity and associated regulatory approval challenges) of the synthetic surfactants used in the prior art. The present invention is therefore a natural product with excellent bioavailability, that is suitable as a medical food and shows no or negligible unwanted side effects related to synthetic surfactants.

The present invention is further advantageous, as the composition represents a formulation suitable for pediatric and geriatric use, where the ability of swallowing large capsules is lacking, or difficult. The paste-like composition of the present invention is therefore preferred and represents a significant improvement over the prior art. This improvement is evident in ease of administration, improved patient compliance, improved taste, and improved administration in subjects with difficulties in swallowing and/or in taking capsules.

Docosahexaenoic acid triglyceride ester (DHATG) is preferred as the omega-3 fatty acid. The inventors have conducted investigations and can show that restoring levels of DHA above those seen in certain diseases lead to an elimination of the disease. Restoring DHA in the cell membrane of children with sickle cell disease, with the use of super-bioavailable formulations in emulsions (a preferred form of the "super-bioavailable state"), is a preferred embodiment of the invention. However, up till now, only one method of achieving such levels exists, that relied on using a reasonable dose comprising up to 6 capsules of a DHA micelle formulation, which is plagued by low compliance rates, especially in children. However, with the present invention, a very simple and small amount of the composition (mayonnaise-like substance) achieves very high levels of DHA in the blood and this level can mimic or even improve on the effect achieved previously with treatment using up to 6 capsules.

Other studies by the inventor can show that similar amounts of DHA may prevent stroke. Through other studies, the inventor can show that super-bioavailable DHA can reduce markers of NAFLD and NASH in liver disease. And in other clinical work, the inventor can show that this level of DHA can reduce blood fats that lead to cardiovascular disease.

The composition described herein, and viscosity of the preparation, cause the typical marine oil and fishy taste to be virtually eliminated, and also make it easy to add different flavoring agents, thereby further enhancing compliance. It was surprising that that egg yolk, combined with the relatively large amounts of DHA, as in the compositions of the present invention, enabled an oil-in-water emulsion with excellent taste-masking of the usually unpleasant fish oil flavor. The compositions of the present invention therefore show the multiple advantages of excellent bioavailability of omega-3 fatty acids, in particular DHA, the basis of a synthetic-surfactant-free natural compositions, and vastly improved taste compared to the compositions of the prior art.

A further objective of this invention is to provide a method that prevents omega-3 fatty acids, ie DHA and optionally other marine oils from oxidizing during production, packaging and distribution, and also later when being used by the consumer. This objective is attained, if desired, without the use of antioxidants.

In addition, it is a further objective of the present invention to produce a multivitamin preparation in which omega-3 fatty acids provide vitamins A and D (and optionally vitamin E). In the aqueous phase water-soluble vitamins are to be added in such amounts that when a daily dose of the preparation is taken for the polyunsaturated fatty acids, a daily dose of vitamins is taken at the same time. If omega-3 fatty acids with a lower content of vitamins than in cod-liver oil are used, then vitamins A, E and D can be added.

Another objective is to add flavor to the omega-3 fatty acids preparation so that the fishy taste is masked or eliminated, and so that aftertaste and regurgitation is prevented. A further objective is to produce a preparation with an appetizing appearance similar to that of mayonnaise. Mayonnaise is also one preferred flavor that is aimed at in the objective. A further objective is to produce an omega-3 fatty acid preparation which can be used during meal times on salads or sandwiches, in the same way as mayonnaise or salad dressing.

The objectives of the invention are achieved by the composition as described herein, optionally in combination with the method disclosed, i.e. by preventing oxidation of the preparation by making an oil-in-water emulsion preferably in an inert atmosphere, preferably using nitrogen.

Advantages of a preparation produced in accordance with the invention are as follows:
1. The thick, paste consistency makes the preparation easy to apply on food, e.g. bread, and therefore used in the same way as mayonnaise. Additionally, mixtures of the inventive composition with yogurt provide flavor to the yogurt and provide a quantity of calcium and probiotics to the diets of people who are also likely to be deficient in these. Other vitamins may be added to the mixture, both water and fat soluble, to meet the needs of other disease deficiencies.
2. The DHA concentration in the preparation is high, viz. 30-80%.
3. The flavor of the preparation can be varied, e.g. by admixing spice, sugar, etc. Such admixtures will mask the marine oil flavor.
4. The flavor impact appears far more favorable than that obtained using a thin emulsion.
5. The oil-in-water emulsion masks the oiliness by being readily dispersible in saliva and gastric juices.
6. In addition to the inherent fat-soluble vitamins, water-soluble vitamins can be added to the preparation.
7. The composition provides excellent bioavailability of DHA for replenishment therapy in patients.

Without being bound by theory, the inventors contemplate that the absence of a surface-active agent, especially the absence of a synthetic surfactant, in the composition with relatively high levels of DHA (above 20 wt%) combined with egg yolk, will lead to the "fat rich" egg yolk causing the release of bile salts into the intestines. When this happens, the fat from the yolk and the omega-3 (also fat) will be entrapped in the bile salts and form normal digestive micelles, post-administration, in the intestine. In the presence of fat, the gall bladder can contract, releasing the bile salts and forms micelles that stimulate breakdown of the triglyceride bonds, thereby forming free fatty acids that can be effectively absorbed. In essence, by mixing oils and fatty egg yolk good adsorption is achieved. Once absorbed, the DHA and other omega-3 fatty acids can be further absorbed into the cell wall (for example in red blood cells). In some embodiments, with respect to the medical treatment and/or prevention of sickle cell disease, the cell is then protected from sickling.

In one embodiment, the composition comprises or consists of an oil-in-water emulsion.

Oil-in-water emulsions are in some embodiments distinct from micelle-containing compositions. Oil-in-water emulsions are also excellent with respect to consistency and ease of administration, useful in improved patient compliance.

In one embodiment, the composition is a mayonnaise, paste or has a mayonnaise-like consistency, for example suitable to be pressed or squeezed from a flexible container or tube.

In one embodiment, the DHA comprises or consists of a triglyceride ester of DHA (DHATG) or other esters of DHA, such as ethyl esters.

In one embodiment, the fatty acids comprise or consist of omega-3 fatty acids.

In one embodiment, the fatty acids comprise or consist of marine oil.

In one embodiment, the composition comprises DHA at 30-80 wt%, preferably 40-70 wt%, more preferably 45-60 wt%.

Also disclosed herein is that the composition comprises DHA at 20-90 wt%, preferably 30-80 wt%, more preferably 40-70 wt%, more preferably 45-60 wt%.

In one embodiment, the composition comprises additionally other fatty acids at 1-50 wt%, preferably 5-40 wt%, or 10-35 wt%, more preferably 20-30 wt% (for example omega-3 fatty acids, or marine oil).

As described herein, the elevated levels of DHA lead to advantages in formulation, administration of the composition, and ultimately in improved therapeutic effects. The DHA may be provided in the form of omega-3 fish oil, or as marine oil. The DHA source, used in manufacture of the composition, may therefore be omega-3 fish oil or other marine oil with a suitable DHA content.

In one embodiment, the composition comprises omega-3 fish oil.

In one embodiment, the composition comprises omega-3 fish oil at 50-90 wt%, preferably 70-80 wt%, more preferably at 75-78 wt%.

According to the present invention, the composition comprises 30-80 percent DHA by weight (30-80 wt%). This amount of DHA can be achieved by various means, all available to a skilled person in light of the description herein. In some embodiments, any omega-3 fish oil can be used, provided that the final DHA content in the composition is 30-80%. To achieve this level, the DHA (and optionally EPA) content can be enriched by purification, which may be referred to as purified omega-3 oil. Means for improving the DHA and EPA content of fish oil are known to a skilled person. Fish oil typically contains about 15% EPA+DHA, a level that can be improved up to 99% purity. In other embodiments, DHA may be sourced separately, for example from manufacture of the lipid, and added to a fish oil, thereby producing a fish oil supplemented with DHA. In one embodiment, DHA may be added to the composition independently of a fish oil, i.e. the DHA itself is manufactured and added to the composition.

In one embodiment, the composition comprises egg yolk at 0.5-25 wt%, preferably 1-15 wt%, more preferably 2-10 wt%.

In one embodiment, the composition comprises egg-yolk (preferably chicken egg yolk) at 1-20 wt%, preferably 5-15 wt%, more preferably 8-12 wt%.

The above-mentioned amounts of egg-yolk may be adjusted as is necessary to achieve the desired composition consistency, flavor and/or appearance, dependent on the intended use. These levels of egg-yolk were not previously described as being effective in emulsion generation using these amounts of DHA, for example in combination with the additional fatty acids, in a composition. Surprisingly, the egg-yolk in these amounts enables an optimal manufacture and resulting formulation of the emulsion described herein.

In one embodiment, the egg-yolk is pasteurized.

In one embodiment, the composition comprises water.

In one embodiment, the composition comprises water at 1-20 wt%, preferably 5-15 wt%, more preferably 8-12 wt%.

In one embodiment, the composition comprises an acidic aqueous medium at 0.5-30 wt%, preferably 1-25 wt%, more preferably 2-20 wt%.

In one embodiment, the acidic aqueous medium comprises or consists of citric acid and/or vinegar.

The above-mentioned amounts of acidic aqueous medium relate, in some embodiments, to the preferred amounts of citric acid employed in the composition.

In some embodiments, the citric acid employed in formulation of the composition is anhydrous.

In one embodiment, the anhydrous citric acid is present at 0.01-5 wt%, preferably 0.05-2 wt%, more preferably 0.1-1 wt%.

In one embodiment, the composition comprises additionally one or more flavoring agents.

In some embodiments, the flavoring agents comprise or consist of salt, sugar, sweetening agents, pepper and/or lemon oil (or d-lemonine).

In one embodiment, the flavoring agents comprise or consist of an orange flavor, preferably a natural orange flavor. Natural and artificial orange flavors are used in medicine to mask or impart taste to orally taken formulations. A flavor refers to natural or artificial tastes, which may include fragrances and colors of the flavoring.

In one embodiment, the composition comprises a natural orange flavor at 0.01-5 wt%, preferably 0.1-4 wt%, more preferably 1-3 wt%.

In one embodiment, the composition additionally comprises one or more preservatives.

In one embodiment, the composition additionally comprises one or more vitamins, preferably water-soluble or oil-soluble vitramins, preferably selected from the group consisting of Vitamin C, Thiamin (B1), Riboflavin (B2), Niacin, Vitamin B and Vitamin E.

In one embodiment, the composition comprises ascorbic acid. In one embodiment, the composition comprises an ascorbic acid at 0.01-10 wt%, preferably 0.1-5 wt%, more preferably 1-2.5 wt%.

Ascorbic acid (also known as vitamin C or ascorbate) is a vitamin found in various foods and is an essential nutrient involved in the repair of tissue and the enzymatic production of certain neurotransmitters. It is required for the functioning of several enzymes and is important for immune system function, and also functions as an antioxidant. In some embodiments, the combined effects of ascorbic acid, with resect to acidifying the composition and its antioxidant properties, provides an unexpected advantage in the composition in providing a mayonnaise-like consistency and avoiding oxidation of the composition.

In one embodiment, the composition comprises sodium ascorbate.

In one embodiment, the composition comprises sodium ascorbate at 0.01-10 wt%, preferably 0.1-5 wt%, more preferably 1-2 wt%.

Sodium ascorbate is one of a number of mineral salts of ascorbic acid (vitamin C), i.e. is the sodium salt of ascorbic acid. As a food additive, it has the E number E301 and is used as an antioxidant and an acidity regulator and is approved for use as a food additive in various countries.

In one embodiment, the composition comprises sucralose. Sucralose is an artificial sweetener and sugar substitute. The majority of ingested sucralose is not broken down by the body, so it is noncaloric. In the European Union, it is also known under the E number E955.

In one embodiment, the composition comprises sucralose at 0.001-1 wt%, preferably 0.01-0.1 wt%.

In one embodiment, the composition comprises canola oil, preferably non-GMO canola oil. Canola oil is a vegetable oil derived from a variety of rapeseed that is low in erucic acid.

In one embodiment, the composition comprises canola oil at 0.01-10 wt%, preferably 0.1-1 wt%.

In one embodiment, the composition comprises potassium sorbate. Potassium sorbate is the potassium salt of sorbic acid, chemical formula CH3CH=CH-CH=CH-CO2K. It is a white salt that is soluble in water and primarily used as a food preservative (E number 202).

In one embodiment, the composition comprises potassium sorbate at 0.01-1 wt%, preferably 0.05-0.1 wt%.

In one embodiment, the composition comprises sodium benzoate. Sodium benzoate is a substance which has the chemical formula C6H5COONa. It is a widely used food pickling agent, with an E number of E211.

In one embodiment, the composition comprises sodium benzoate at 0.01-1 wt%, preferably 0.05-0.1 wt%.

In one embodiment, the composition comprises beta carotene beadlets (preferably with 10% beta carotene). Carotene beadlets typically comprise red or reddish-brown beadlets. The preferably microencapsulated beadlets are typically manufactured with spray and starch-catching drying technology. Preferably, the individual particles containing Beta-Carotene are finely dispersed in the matrix of modified food starch, coated with corn starch, and are often used as a coloring agent and a source of vitamin A in food products.

In one embodiment, the composition comprises beta carotene beadlets at 0.001-10 wt%, preferably 0.01-1 wt%.

In one embodiment, the composition comprises xanthan gum. Xanthan gum is a polysaccharide with various industrial uses, including as a common food additive. It is an effective thickening agent and stabilizer to prevent ingredients from separating.

In one embodiment, the composition comprises xanthan gum at 0.001-10 wt%, preferably 0.01-1 wt%.

In one embodiment, the composition comprises menthol, preferably L-menthol. Menthol is an organic compound made synthetically or obtained from the oils of corn mint, peppermint, or other mints. It is a waxy, crystalline substance, clear or white in color, which is solid at room temperature and melts slightly above.

In one embodiment, the composition comprises menthol, preferably L-menthol at 0.001-10 wt%, preferably 0.01-1 wt%.

In one embodiment, the composition comprises:
a. DHA at 30-80 wt%, preferably 40-70 wt%, more preferably 45-60 wt%;
b. other fatty acids at at 1-50 wt%, preferably 5-40 wt%, or 10-35 wt%, more preferably 20-30 wt% (for example omega-3 fatty acids or marine oil);
c. egg yolk at 0.5-25 wt%, preferably 1-15 wt%, more preferably 2-10 wt%; and
d. an acidic aqueous medium at 0.5-30 wt%, preferably 1-25 wt%, more preferably 2-20 wt%.

In one embodiment, the composition comprises additionally:
a. Lemon oil (or d-lemonine) at 0.1-10 wt%, preferably 0.5-5 wt%;
b. Sugar at 0.5-20 wt%, preferably 2-10 wt%;
c. Salt at 0.01-5 wt%, preferably 0.1-3 wt%;
d. Citric acid at 0.1-10 wt%, preferably 1-5 wt%;
e. Water at 0.5-20 wt%, preferably 1-10 wt%;
f. Pepper at 0.01-5 wt%, preferably 0.1-2, and wt%; and/or
g. Preservatives at 0.001-2 wt%, preferably 0.1-1 wt%.

In one embodiment, the composition comprises:
a. omega-3 fish oil at 50-90 wt%, preferably 70-80 wt%, more preferably at 75-78 wt%, the composition comprising at least 30-80 wt% DHA,
b. or DHA at 30-80 wt%, more preferably 40-70 wt%, more preferably 45-60 wt%; and other fatty acids at 1-50 wt%, preferably 5-40 wt%, or 10-35 wt%, more preferably 20-30 wt% (for example omega-3 fatty acids or marine oil);
b. water at 1-20 wt%, preferably 5-15 wt%, more preferably 8-12 wt%,
c. egg-yolk (preferably chicken egg yolk, more preferably pasteurized) at 1-20 wt%, preferably 5-15 wt%, more preferably 8-12 wt%, and
d. anhydrous citric acid at 0.01-5 wt%, preferably 0.05-2 wt%, more preferably 0.1-1 wt%, and
e. optionally, one or more flavoring, stabilizing, and/or preserving agents, optionally with one or more additional excipients.

In one embodiment, the composition comprises:
a. omega-3 fish oil at 50-90 wt%, preferably 70-80 wt%, more preferably at 75-78 wt%, the composition comprising at least 30-80 wt% DHA,
b. or DHA at 30-80 wt%, more preferably 40-70 wt%, more preferably 45-60 wt%; and other fatty acids at 1-50 wt%, preferably 5-40 wt%, or 10-35 wt%, more preferably 20-30 wt% (for example omega-3 fatty acids or marine oil);
c. water at 1-20 wt%, preferably 5-15 wt%, more preferably 8-12 wt%,
d. egg-yolk (preferably chicken egg yolk, more preferably pasteurized) at 1-20 wt%, preferably 5-15 wt%, more preferably 8-12 wt%,
e. anhydrous citric acid at 0.01-5 wt%, preferably 0.05-2 wt%, more preferably 0.1-1 wt%;
f. ascorbic acid at 0.01-10 wt%, preferably 0.1-5 wt%, more preferably 1-2.5 wt%;
g. sucralose at 0.001-1 wt%, preferably 0.01-0.1 wt%;
h. sodium ascorbate at 0.01-10 wt%, preferably 0.1-5 wt%, more preferably 0.1-2 wt%;
i. orange flavor (preferably natural) at 0.01-5 wt%, preferably 0.1-4 wt%, more preferably 1-3 wt%;
j. canola oil at 0.01-10 wt%, preferably 0.1-1 wt%;
k. potassium sorbate at 0.01-1 wt%, preferably 0.05-0.1 wt%;
l. sodium benzoate at 0.01-1 wt%, preferably 0.05-0.1 wt%;
m. beta carotene beadlets at 0.001-10 wt%, preferably 0.01-1 wt%;
n. xanthan gum at 0.001-10 wt%, preferably 0.01-1 wt%; and
o. menthol, preferably L-mentho,l at 0.001-10 wt%, preferably 0.01-1 wt%.

In one embodiment, the composition is essentially free of micelles having an average diameter of 1-10µm. In one embodiment, some negligible levels of micelles are present, for example having an average diameter of 1-10µm, but these do not form a major constituent of the composition.

Without being bound by theory, the inventor observed emulsions using the compositions and processes as described herein, whereby no resemblance to micelle formation was observed. Instead, a myriad of "bubbles" of various sizes ranging from submicron to over 100 microns in diameter was observed. The "bubbles" do not appear to have the structure of a micelle and form in essence an emulsion (as can be obtained oil is mixed with water and shaken or homogenized).

In one embodiment, the composition is essentially free of surfactants, preferably synthetic surfactants, such as polysorbates. It was unexpected that such emulsions, achieving good bioavailability of the oil components, could be obtained without the use of common surfactants, especially without synthetic surfactants.

Also disclosed herein is a medical food product comprising the composition according to the invention.

The medical food product as described herein may be in the form of a mayonnaise, mayonnaise-like composition or paste.

The medical food product as described herein may be packaged in a container formed of an airtight material, preferably a flexible container (squeezable).

In one embodiment, the composition and/or medical food product is prepared and packaged in a packet, or sachet. Sachets and packets are known to a skilled person and typically relate to flexible containers of metal or plastic foil, sealed in an essentially air- and/or liquid-tight manner. Mayonnaise sachets are envisaged for the composition and/or medical food of the invention.

The container, preferably a packet or sachet, may therefore in some embodiments have dimensions of 5 to 20 cm in length and/or 2 to 10 cm in width. In some embodiments, the sachets or packets containing the inventive composition or medical food comprise 5-50 ml, preferably 6-30 ml, more preferably 7-25 ml of composition. In some embodiments, the sachet or packet comprises up to 200 mL, such as a 100 mL amount. Common sachet sizes are available that hold approximately 9, 10, 20 or 30 ml of the composition, which is typically about 9, 10, 20 or 30 g. Such sachets or packets may be employed for the present invention. Preferred embodiments comprise about 10g sachet sizes.

In one embodiment, the medical food product as described herein is packaged in soft plastic, a tube or a static container with a piston or screw for dispensing.

In one embodiment, the tube or container is arranged to collapse during use proportionally to the amount of said composition remaining after a portion of said composition is dispensed from said container, wherein preferably no air space forms in said container after said dispensing, and wherein no discernible oxidation occurs during the storage and use of said composition.

A further aspect of the invention relates to the composition as described herein for use as a medicament in the treatment of a medical condition as described in claims 9-14. Also disclosed herein are methods of treatment of medical conditions comprising administering the composition or medical food as described herein to a subject in need thereof.

In one embodiment, the composition or medical food for use as a medicament as described herein, is for the treatment of a medical condition associated with pathologically low DHA levels.

In one embodiment, the composition or medical food for use as a medicament as described herein, is for the treatment of metabolic disease or a membranopathy (e.g. a imbalanced state that a cell membrane is in which is abnormal and leads to various disease states).

In one embodiment, the composition or medical food for use as a medicament as described herein, is for the treatment of sickle cell disease.

In one embodiment, regarding the treatment of sickle cell disease, the subject is a pediatric subject, preferably of age from 1 week to 18 years, preferably below 5 years of age, more preferably infants in their first year.

In one embodiment, regarding the treatment of sickle cell disease, the treatment is administered in advance of sickle cell disease symptoms, preferably in a subject of an age below about 9 months, to prevent, or reduce the risk of, sickle cell disease occurring.

Without being bound by theory, infants with sickle cell disease typically don't have HgSS blood until their fetal hemoglobin is replaced at about 9 months. Therefore, the first sickle cell attack typically occurs after 9 months when the new HgSS blood destroys the DHA in the cell membrane. The present invention, in a preferred embodiment, therefore enables treating an infant subject, such as a baby, before a first attack and avoid the medical condition developing.

In one embodiment, the composition or medical food for use as a medicament as described herein is for the treatment of a membranopathy, wherein the membranopathy is selected from the list consisting of diabetes and ischemic disease, such as high blood fats, cardiovascular disease and stroke.

In one embodiment, the composition or medical food for use as a medicament as described herein is for the treatment of non-alcoholic fatty liver disease (NAFLD) and non-alcoholic steatohepatitis (NASH).

In one embodiment, the composition is dosed (preferably as packets or sachets) to a subject in need thereof, preferably a subject is dosed 1 to 5 doses (packets or sachets) a day, wherein each dose comprises 5 to 50 g of composition or medical food, preferably 6 to 30 g of composition or medical food. In some embodiments, the subject is dosed up to 200 g of composition and/or medical food per day, for example 100g per day, in other embodiments the subject is dosed 10, 20, 30, 40 or 50 g composition and/or medical food per day.

A further aspect of the invention relates to a process for the preparation of a composition as described herein.

In one embodiment, the process comprises:
a. forming an oil-in-water emulsion comprising at least DHA at 30-80 wt%, egg yolk and acidic aqueous medium (which can in some embodiments be obtained by the combination of water and anhydrous citric acid), in an amount sufficient to provide a mayonnaise-type emulsion or paste; and
b. completely filling said emulsion into a container of an airtight material.

In one embodiment, the process comprises:
a. forming an oil-in-water emulsion comprising omega-3 fish oil (preferably comprising at least 30-80 wt% DHA), or DHA at 30-80 wt% and other fatty acids at 1-50 wt%, water, egg-yolk, anhydrous citric acid and optionally, one or more flavoring, stabilizing, and/or preserving agents, optionally with one or more additional excipients, in an amount sufficient to provide a mayonnaise-type emulsion or paste; and
b. completely filling said emulsion into a container of an airtight material.

In some embodiments, the process comprises the addition of the components and excipients described herein, for example in the appropriate amounts, as described in the compositions above, and thus producing the composition or medical food product as described herein.

In one embodiment, the emulsion is prepared and filled in inert atmosphere, preferably selected from the group consisting of N2 and CO2.

In one embodiment, the tube or container is arranged to collapse during use proportionally to the amount of said composition remaining after a portion of said composition is dispensed from said container, wherein preferably no air space forms in said container after said dispensing, and wherein no discernible oxidation occurs during the storage and use of said composition.

Also disclosed herein is a business process for preparing, offering and sale of a medical food, preferably according to the composition or medical food as described herein, suitable for replenishing DHA in subjects in whom DHA was destroyed as a result of a metabolic disfunction, such as sickle cell disease, said process comprising preparing the composition as a medical food and subsequent offering and sale of said medical food, preferably wherein said medical food is free from regulatory approval for a pharmaceutical composition.

The various aspects of the invention described herein are described by features relating to the composition or process. Each of the features relating to the composition may also apply to the process, and vice versa. Furthermore. any of the features described herein with respect to any aspect of the invention, may be used to described other aspects of the invention.

For each of the components described herein, the various amounts disclosed for each component may be combined in any given combination, to arrive an at optimal composition. The "preferable" component amounts may also be selected and combined with other amounts of other components as may be necessary, without resulting in undisclosed combinations. Each of the amounts of each component are considered disclosed in relation to one another.

### DETAILED DESCRIPTION OF THE INVENTION

Omega-3 fatty acids are polyunsaturated fatty acids (PUFAs) with a double bond at the third carbon atom from the end of the carbon chain. The three types of omega-3 fatty acids involved in human physiology are α-linolenic acid (ALA) (found in plant oils), eicosapentaenoic acid (EPA), and docosahexaenoic acid (DHA) (both commonly found in fish oil that originally come from microalgae that is further consumed by phytoplankton, a source of diet for fish). Omega-3 fatty acids play a critical role in metabolism and cellular function.

The simplest n-3 fatty acid is α-linolenic acid (18:3n-3). α-linolenic acid is synthesized from the n-6 fatty acid α- linolenic acid (18:2n-6) by desaturation, catalyzed by delta-15 desaturase. Animals, including humans, do not possess the delta-15 desaturase enzyme and so cannot synthesize α-linolenic acid. In contrast, plants possess delta-15 desaturase and so are able to synthesize α-linolenic acid. Although animals cannot synthesize α-linolenic acid, they can metabolize it by further desaturation and elongation. Desaturation occurs at carbon atoms below carbon number 9 (counting from the carboxyl carbon) and mainly occurs in the liver. α -linolenic acid can be converted to stearidonic acid (18:4n-3) by delta-6 desaturase and then stearidonic acid can be elongated to eicosatetraenoic acid (20:4n-3), which can be further desaturated by delta-5 desaturase to yield eicosapentaenoic acid (20:5n-3; known as EPA).

It is important to note that the conversion of α-linolenic acid to EPA is in competition with the conversion of linolenic acid to arachidonic acid (20:4n-6) since the same enzymes are used. The delta-6 desaturase reaction is rate limiting in this pathway. The preferred substrate fordelta-6 desaturase is α-linolenic acid. However, α linoleic acid is much more prevalent in most human diets than a-linolenic acid, and so metabolism of n-6 fatty acids is quantitatively the more important. The activities of delta-6 and delta-5 desaturases are regulated by nutritional status, hormones and by feedback inhibition by end products. The pathway for conversion of EPA to docosahexaenoic acid (22:6n-3; known as DHA) involves addition of two carbons to EPA to form docosapentaenoic acid (22:5n-3; known as DPA), addition of two further carbons to produce 24:5n-3, desaturation at the delta-6 position to form 24:6n-3, translocation of 24:6n-3 from the endoplasmic reticulum to peroxisomes where two carbons are removed by limited β-oxidation to yield DHA.

The present invention therefore relates to compositions, amongst other aspects, that enable enhanced delivery and bioavailability of DHA to subjects in need thereof.

As used herein, a "fatty acid" is a carboxylic acid with a long aliphatic chain, which is either saturated or unsaturated. Most naturally occurring fatty acids have an unbranched chain of an even number of carbon atoms, from 4 to 28. Fatty acids are usually not found in organisms, but instead as three main classes of esters: triglycerides, phospholipids, and cholesteryl esters. In any of these forms, fatty acids are both important dietary sources of fuel for animals and they are important structural components for cells. Fatty acid esters (FAEs) are a type of ester that result from the combination of a fatty acid with an alcohol. When the alcohol component is glycerol, the fatty acid esters produced can be monoglycerides, diglycerides, or triglycerides. Dietary fats are typically triglycerides.

As used herein, "Omega-3 fatty acids", also called Omega-3 oils, ω-3 fatty acids or n-3 fatty acids, are polyunsaturated fatty acids (PUFAs) characterized by the presence of a double bond three atoms away from the terminal methyl group in their chemical structure. They are widely distributed in nature, being important constituents of animal lipid metabolism, and they play an important role in the human diet and in human physiology. The three types of omega-3 fatty acids involved in human physiology are α-linolenic acid (ALA), found in plant oils, and eicosapentaenoic acid (EPA) and docosahexaenoic acid (DHA), both commonly found in marine oils, such as cod-liver oil.

As used herein, "fish oil", or "marine oil" or "omega-3 fish oil", is an oil derived from the tissues of fish or other marine-dwelling organism. Fish oils contain the omega-3 fatty acids eicosapentaenoic acid (EPA) and docosahexaenoic acid (DHA), precursors of certain eicosanoids that are known to reduce inflammation in the body and improve hypertriglyceridemia. Examples of fish high in EPA and DHA are oily fish, such as salmon, herring, mackerel, anchovies, menhaden, and sardines. The term "omega 3 fish oil" refers to a fish oil preparation rich in Omega-3 fatty acids. One example of an omega 3 fish oil is cod liver oil, a dietary supplement derived from liver of cod fish.

Methods for producing and formulating fish oil, or omega-3 fatty acids from fish oil, by either extraction or synthesis, are well-known to a skilled person and are commercially available. As of 2019, the US Food and Drug Administration has approved four fish oil-based prescription drugs, namely Lovaza, Omtryg (both omega-3 acid ethyl esters), Vascepa (ethyl eicosapentaenoic acid), and Epanova (omega-3 carboxylic acids).

As used herein, the term "DHA" or "docosahexaenoic acid" inclusively refers to (4Z,7Z,10Z,13Z,16Z,19Z)- docosa-4,7, 10,13, 16,19-hexaenoic acid or derivatives thereof, including alkyl esters, such as, for example, the ethyl ester, or other esters, such as, for example, the monoglyceride, diglyceride or triglyceride ester. Docosahexaenoic acid (DHA) is an omega-3 fatty acid that is a primary structural component of the human brain, cerebral cortex, skin, and retina. In physiological literature, it is given the name 22:6(n-3). It can be synthesized from alpha-linolenic acid or obtained directly from maternal milk (breast milk), fish oil, or algae oil. DHA's structure is a carboxylic acid (-oic acid) with a 22-carbon chain (docosa- derives from the Ancient Greek for 22) and six (hexa-) cis double bonds (-en-); with the first double bond located at the third carbon from the omega end.

As used herein, the term "EPA" refers inclusively to (5Z,8Z,1 IZ,14Z,17Z)-eicosa- 5,8,11,14,17-pentenoic acid or derivatives thereof, including alkyl esters, such as, for example, the ethyl ester, or other esters, such as, for example, the monoglyceride, diglyceride or triglyceride ester.

As used herein, the term "micelle" (plural micelles, micella, or micellae) refers to an aggregate of molecules, that have assembled into an approximately spherical core/shell architecture, and are suspended in an aqueous phase. A typical micelle in aqueous solution forms an aggregate with the hydrophilic "head" regions in contact with surrounding solvent and/or in contact with the polar region of one or more surface active agent(s), sequestering the hydrophobic regions in the micelle center. Micelles are approximately spherical in shape.

As used herein, the term "aqueous medium" refers to any solution or suspension, that comprises water, including for example, without limitation, water by itself; phosphate buffered saline pH 7.4, Sprite, apple juice, G-2 fruit punch, and chocolate milk. In certain embodiments, an aqueous medium comprises at least one fluid having an acidic pH, such as citric acid or vinegar. In certain other embodiments, an aqueous medium comprises a biological fluid such as, for example and without limitation, stomach acid. In other embodiments, the aqueous medium comprises simulated stomach acid comprising 0.1N HCl.

As used herein, the term "free fatty acid" refers to one or more (preferably polyunsaturated) fatty acids that have not been modified or do not have any other groups attached.

As used herein, the term "ester" refers to the replacement of the hydrogen in the carboxylic acid group of a polyunsaturated fatty acid molecule with another substituent. Typical esters are known to those in the art, a discussion of which is provided by Higuchi, T. et al., Pro-drugs as Novel Delivery Systems, Vol. 14, A.C.S. Symposium Series, Bioreversible Carriers in Drug Design, Ed. Edward B. Roche, Amer. Pharma. Assoc., Pergamon Press (1987), and Protective Groups in Organic Chemistry, McOmie ed., Plenum Press, New York (1973). Examples of common esters include methyl, ethyl, trichloroethyl, propyl, butyl, pentyl, tert-butyl, benzyl, nitrobenzyl, methoxybenzyl, benzhydryl, monoglyceride, diglyceride, triglyceride.

As used herein, the term "monoglyceride" refers to a fatty acid chain, such as DHA molecule, covalently bonded to a glycerol molecule through an ester linkage.

As used herein, the term "diglyceride" refers to a fatty acid chain such as DHA, covalently bonded to a glycerol molecule through an ester linkage, wherein the glycerol molecule is further bonded to one additional fatty acid chain, which may or may not be DHA, through one additional ester linkage.

As used herein, the term "triglyceride" refers to a fatty acid chain, such as DHA, covalently bonded to a glycerol molecule through an ester linkage, wherein the glycerol molecule is further bonded to two additional fatty acid chains, either or both of which may or may not be DHA, through two additional ester linkages.

In some embodiments, one or more antioxidants may be present in the composition. As used herein, the term "antioxidant" refers to a molecule capable of inhibiting the oxidation of other molecules. Oxidation is a chemical reaction that transfers electrons or hydrogen from a substance to an oxidizing agent. Oxidation reactions can produce free radicals. In turn, these radicals can start chain reactions. When the chain reaction occurs in a cell, it can cause damage or death to the cell. Antioxidants terminate these chain reactions by removing free radical intermediates, and inhibit other oxidation reactions. They do this by being oxidized themselves, so antioxidants are often reducing agents such as thiols, ascorbic acid, or polyphenols. Exemplary antioxidants include rosemary oil, ascorbic acid (vitamin C), glutathione, lipoic acid, uric acid, carotenes, melatonin, ubiquinol (coenzyme Q), a-tocopherol (vitamin E), acorbyl palmitate, butylated hydroxyanisole, butylated hydroxytoluene, monothioglycerol, and potassium metabisulfite.

In some embodiments, one or more pharmaceutically acceptable carriers may be present in the composition. As used herein, a pharmaceutically acceptable "carrier" refers to any substance suitable as a vehicle for delivering a molecule or composition to a suitable in vivo site of absorption. Examples of such carriers include, but are not limited to water, phosphate buffered saline (PBS), Ringer's solution, dextrose solution, serum-containing solutions, Hank's solution and other aqueous physiologically-balanced solutions.

In some embodiments, one or more preservatives, for example a pharmaceutically acceptable preservatives, may be present in the composition. As used herein, a pharmaceutically acceptable "preservative" includes but is not limited to potassium sorbate, methylparaben, propylparaben, benzoic acid and its salts, other esters of parahydroxybenzoic acid such as butylparaben, alcohols such as ethyl or benzyl alcohol, phenolic compounds such as phenol, or quarternary compounds such as benzalkonium chloride. Other preservatives, for example those for a medical food product, or food product, are, without limitation, E211, E202, E218.

In some embodiments, one or more coloring agents may be present in the composition. As used herein, a "coloring agent" provides coloration to the composition or dosage form. Such coloring agents include food grade dyes.

As used herein, the term "subject" refers to a mammal, including but not limited to a dog, cat, horse, cow, pig, sheep, goat, chicken, rodent, primate or human. Subjects include animals such as house pets (e.g., dogs, cats, and the like), agricultural stock subjects (e.g., cows, horses, pigs, chickens, etc.), laboratory subjects (e.g., mice, rats, rabbits, etc.), but are not so limited. The human subject may be a pediatric, adult, or a geriatric subject. The human subject may be of any gender. Preferred subjects are pediatric subjects, without limitation, such as subjects preferably of age from 1 week to 18 years, preferably below 5 years of age, more preferably infants in their first year, for example subjects for prophylactic treatment of sickle cell disease prior to about 9 months of age.

In some embodiments, an effective amount of DHA is present in the composition. As used herein, an "effective amount" or "therapeutically effective amount" of a composition as described in some embodiments herein can be a quantity sufficient to achieve a desired therapeutic and/or prophylactic effect, for example, an amount which results in the prevention of, or a decrease in the symptoms associated with, a disease that is being treated.

The amount of composition administered to the subject, particularly one in need of the composition, can depend on the type and severity of the disease and on the characteristics of the individual, such as general health, age, sex, body weight and tolerance to drugs. A person skilled in the art will be able to determine appropriate dosages depending on these and other factors. Typically, an effective amount of the compositions described herein can be sufficient for achieving a therapeutic or prophylactic effect.

In some embodiments, the composition may be prepared in dose units, units doses or in a dosage unit. The terms "dose unit," "unit dose," and "dosage unit," as used herein, refer to a portion of a composition that contains an effective amount of an active suitable for a single administration to provide, or contribute to, a therapeutic effect. Such dosage units may be administered one to a plurality (i.e., 1 to about 10, 1 to 8, 1 to 6, 1 to 4 or 1 to 2) of times per day, or as many times as needed to elicit a therapeutic response. In some embodiments, the dosages are administered as packets or sachets to a subject, preferably a subject is dosed 1 to 5 packets or sachets a day, wherein each packet and/or sachet comprises 5 to 50 g of composition or medical food, preferably 6 to 30 g of composition or medical food, more preferably the subject receives one dose of 6 to 30 g of composition or medical food per day.

Various modes of treatment or prevention of medical conditions as described herein. Such treatment may mean "substantial" treatment, which includes total but also less than total treatment or prevention, and wherein some biologically or medically relevant result is achieved. A subject, such as a human subject, in need of treatment refers to a subject in need of treatment of a defined disease state or in need of preventative treatment (i.e., prophylaxis) of such a disease state, where as the term "preventive" is not considered to provide absolute prevention, rather a reduction in the risk of developing a disease or disease symptoms.

The term "about" or "approximately" as used herein means within an acceptable error range for the particular value as determined by one of ordinary skill in the art, which will depend in part on how the value is measured or determined, i.e., the limitations of the measurement system. Where particular values are described in the application and claims, unless otherwise stated, the term "about" means within an acceptable error range for the particular value.

In some embodiments, the composition is prepared such that DHA is considered an active ingredient. The term "active(s)", "active ingredient(s)", "active agents" or "pharmaceutically active ingredient" means a chemical entity intended to furnish pharmacological activity or to otherwise have direct effect in the diagnosis, cure, mitigation, treatment or prevention of disease, or to have direct effect in restoring, correcting or modifying physiological functions in a subject.

The term "functional food" or "medical food" as used herein means any edible or drinkable foods or dietary components (e.g., mayonnaise, juices, milk, yogurt, butter, margarine, baking products) that are fortified or enhanced with any of the compositions described herein. The functional food can be, e.g., solid, liquid, semisolid, or a combination thereof. The term "functional food" or "medical food" also encompasses edible and drinkable nutritional supplements.

According to the invention, the composition comprises egg yolk. Among animals which produce eggs, the yolk (also known as the vitellus) is the nutrient-bearing portion of the egg whose primary function is to supply food for the development of the embryo. As stored food, yolks are often rich in vitamins, minerals, lipids and proteins.

In some embodiments, an avian egg yolk, preferably a chicken egg yolk is used. In avian eggs, the yolk usually is a hue of yellow in color. It is spherical and is suspended in the egg white (known alternatively as albumen or glair/glaire) by one or two spiral bands of tissue called the chalazae. As food, the chicken egg yolk is a major source of vitamins and minerals. It contains all of the egg's fat and cholesterol, and nearly half of the protein.

Chicken egg yolk contains about 60 kilocalories (250 kJ), three times the energy content of the egg white, mostly due to its fat content. All of the fat-soluble vitamins (A, D, E and K) are found in the egg yolk. Egg yolk is one of the few foods naturally containing vitamin D. Typically, the composition (by weight) of the most prevalent fatty acids in egg yolk typically is: Unsaturated fatty acids: Oleic acid, 47%, Linoleic acid, 16%, Palmitoleic acid, 5%, Linolenic acid, 2%, Saturated fatty acids: Palmitic acid, 23%, Stearic acid, 4%, Myristic acid, 1% (Reference: National Research Council, 1976, Fat Content and Composition of Animal Products, Printing and Publishing Office, National Academy of Science, Washington, D.C.). Egg yolk is a source of lecithin, as well as egg oil, for cosmetic and pharmaceutical applications. Based on weight, egg yolk contains about 9% lecithin. The yellow color is due to lutein and zeaxanthin, which are yellow or orange carotenoids known as xanthophylls.

In some embodiments, the composition comprises a flavoring agent. As used herein, the term "flavoring agent" relates to any substance or compound intended to modify, preferably enhance, the flavor of the composition when administered orally to a mammalian, preferably human, subject. Without limitation, flavoring agents may comprise, for example, salt, sugar, sweetening agents, pepper, lemon oil, dried or otherwise preserved herbs, spices, chocolate, cocoa or mustard.

Natural flavors may be provided, without limitation, in the form of an essential oil, oleoresin, essence or extractive, protein hydrolysate, distillate, or any product of roasting, heating or enzymolysis, which contains the flavoring constituents derived from a spice, fruit or fruit juice, vegetable or vegetable juice, edible yeast, herb, bark, bud, root, leaf or similar plant material, meat, seafood, poultry, eggs, dairy products, or fermentation products thereof, whose significant function in food is flavoring rather than nutritional. Artificial flavors include, without limitation, any substance, the function of which is to impart flavor, which is not derived from a spice, fruit or fruit juice, vegetable or vegetable juice, edible yeast, herb, bark, bud, root, leaf or similar plant material, meat, fish, poultry, eggs, dairy products, or fermentation products thereof.

As used herein, an emulsion is a mixture of two or more liquids that are immiscible (unmixable or unblendable) owing to liquid-liquid phase separation. Emulsions are part of a more general class of two-phase systems of matter called colloids. Although the terms colloid and emulsion are sometimes used interchangeably, emulsion is employed when both phases, dispersed and continuous, are liquids. In an emulsion, one liquid (the dispersed phase) is dispersed in the other (the continuous phase). As an example, oil and water can form, first, an oil-in-water emulsion, in which the oil is the dispersed phase, and water is the continuous phase.

The emulsifier of the present invention is egg yolk, in which the main emulsifying and thickening agent is lecithin. Mayonnaise, for example, is considered an oil-in-water emulsion stabilized with egg yolk (lecithin). The emulsions of the invention may therefore also be referred to as creams, ointments, pastes, films, or liquids, depending mostly on their oil-to-water ratios, additives, and intended route of administration.

Methods for emulsification, and for mixing the oil-in-water emulsions, are known to a skilled person. For example, the Gibb's free energy change, ΔG, on forming an emulsion from two bulk liquids is given by the familiar equation: ΔG=ΔH-TΔS, where ΔH is enthalpy change, T is temperature, and ΔS is entropy change. Without going deeply into the relative energetic contributions, the free energy of emulsification is positive. The first effect of this is that emulsification is rarely a spontaneous process, and hence requires some input of energy. This energy usually comes from mechanical shear provided by various types of mixers, and the final droplet size of the emulsion is dependent on not only the components, but also the amount of energy applied. Suitable methods are available in the field of formulation technology. Simple paddle-type mixers are suitable when the required droplet size is above ~10 µm but to make smaller droplets, higher shear is generally required. High shear rotor-stator mixers are commonly used. These operate by pumping the emulsion phases through the narrow gap between a perforated cylinder (the stator) and the blades of a rapidly rotating stirrer housed inside it (the rotor) where the forces are sufficient to make droplets.

Emulsions are typically prepared by adding one phase to the other over time, with one or both phases containing emulsifier, and applying shear. In some cases, one or both phases are heated prior to mixing to aid emulsification. The phases are mixed until the mean droplet size is within specification. With overhead stirrers this is simply a matter of time, whereas with a high-pressure homogenizer each portion of the mixture sees only brief mixing as it passes through the interaction chamber, so once collected, the product of the first emulsification pass-through may then need to be re-fed through the machine until the desired size is obtained. It is not uncommon to require multiple passes to achieve the desired droplet size.

References herein to the absence of surfactants relate preferably to the absence of synthetic surfactants, such as the polysorbates or poloxamers described herein, as known to a skilled person. Surfactants are compounds that are typically amphiphilic, meaning they have a polar or hydrophilic (i.e. water-soluble) part and a non-polar (i.e. hydrophobic or lipophilic) part. Surface active agents, or surfactants, are known commonly as nonionic surface active agents, cationic surface active agents, anionic surface active agents, zwitterionic surface active agents, or combinations thereof. Non-ionic surface active agents generally have a hydrophobic group and a reactive hydrogen atom, for example aliphatic alcohols, acids, amides and alkyl phenols, with alkylene oxides, especially ethylene oxide either alone or in combination with propylene oxide.

A common class of surfactant is the polyoxyethylene glycol sorbitan alkyl esters. These are typically referred to as polysorbates. Polysorbates are a class of oily liquids derived from PEG-ylated sorbitan (a derivative of sorbitol) esterified with fatty acids. Common brand names for polysorbates include Tween^{®}. Tween-20, Tween-60 and Tween-80, for example, are available from AkzoNobel (Strawinskylaan 2555 1077 ZZ, Amsterdam, the Netherlands). Exemplary polysorbates include polysorbate 20 (polyoxyethylene (20) sorbitan monolaurate), polysorbate 40 (polyoxyethylene (20) sorbitan monopalmitate ), polysorbate 60 (polyoxyethylene (20) sorbitan monostearate), and polysorbate 80 (polyoxyethylene (20) sorbitan monooleate). Further examples of well-known surfactants are block copolymers of polyethylene glycol and polypropylene glycol, including poloxamers. Poloxamers are nonionic triblock copolymers composed of a central hydrophobic chain of polyoxypropylene (poly(propylene oxide)) flanked by two hydrophilic chains of polyoxyethylene (poly(ethylene oxide)). Certain poloxamers are also known by the trade names Pluronic^{®} available from suppliers such as BASF.

As described herein, surfactants, in particular synthetic surfactants, are in preferred embodiments not present in the compositions of the present invention. Also preferred is the absence of polysorbate surfactants. In some embodiments, those surfactants disclosed in WO2013148136 are preferably not present in the compositions of the present invention.

As used herein, the term "medical food" means any edible or drinkable foods, drinks or dietary components (e.g., mayonnaise, milk, yogurt, butter, margarine) that comprise, are fortified and/or enhanced with any of the compositions described herein. The medical food can be, e.g., solid, liquid, semisolid, or a combination thereof. The term "medical food" also encompasses edible and drinkable nutritional supplements.

In one embodiment, the invention is suitable for treating sickle cell disease. Sickle cell disease (SCD) is a group of genetic blood disorders. The most common type is known as sickle cell anemia (SCA). It results in an abnormality in the oxygen-carrying protein hemoglobin found in red blood cells. This leads to a rigid, sickle-like shape. Problems in sickle cell disease typically begin around 5 to 6 months of age, up to 9 months of age. Following symptoms are attacks of pain ("sickle cell crisis"), anemia, swelling in the hands and feet, bacterial infections and stroke. Sickle cell disease occurs when a person inherits two abnormal copies of the β-globin gene (HBB) that makes hemoglobin, one from each parent. Several subtypes exist, depending on the exact mutation in each hemoglobin gene. An attack can be set off by temperature changes, stress, dehydration, and high altitude. A person with a single abnormal copy can but does not usually have symptoms and is said to have sickle cell trait. The care of people with sickle cell disease may include infection prevention with vaccination and antibiotics, high fluid intake, folic acid supplementation, and pain medication. As of 2015, about 4.4 million people have sickle cell disease, while an additional 43 million have sickle cell trait. It is important to mention that the plasma membrane of red blood cells, white blood cells and platelets of patients with SCD has an abnormal fatty acid composition, characterized by decreased levels of DHA and EPA and a concomitant increase in arachidonic acid. Treatment of SCD with omega 3 fatty acids, in particular DHA, is therefore a promising approach. In one embodiment, the invention is suitable for treating diabetes. Studies have suggested that polyunsaturated fatty acids (PUFAs) derived from oily fish (long-chain omega-3) and from plants (alpha-linolenic acid and omega-6) may have beneficial effects on the body that could help protect against type 2 diabetes.

In one embodiment, the composition described herein is suitable for treating ischemic disease. Ischemic disease or ischemia is a restriction in blood supply to tissues, causing a shortage of oxygen that is needed for cellular metabolism (to keep tissue alive), leading to illness. Ischemia is generally caused by problems with blood vessels, with resultant damage to or dysfunction of tissue. Examples of ischemic disease are those caused by high blood fats, cardiovascular disease (e.g. coronary artery disease) and stroke. Studies have shown that higher circulating levels of DHA are inversely associated with incident atherothrombotic stroke. Large-scale studies also suggest that people at risk for coronary heart disease (CHD) benefit from consuming omega-3 fatty acids from plants and marine sources. These findings suggest a benefit for DHA treatment in preventing or treating ischemic or cardiovascular disease.

In one embodiment, the invention is suitable for treating non-alcoholic fatty liver disease (NAFLD) and non-alcoholic steatohepatitis (NASH). Nonalcoholic fatty liver disease (NAFLD) is the most common chronic fatty liver disease worldwide. The incidence of NAFLD parallels the prevalence of obesity. Moreover, NAFLD can progress to nonalcoholic steatohepatitis (NASH), cirrhosis and primary hepatocellular cancer (HCC). Studies have shown that dietary supplementation with omega 3 fatty acids, such as DHA, should be considered as a viable and effective option to lower liver fat in subjects (including obese adults and children) with NAFLD.

### FIGURES

The figures presented herein represent non-limiting, exemplary embodiments, in accordance with the invention, that provide support for carrying out the invention and demonstrating the beneficial effects described herein.

### Brief description of the Fiqures:

**Fig. 1**: CRP levels from a trial in patients with sickle cell disease.
**Fig. 2**: Percentage change from baseline for DHA levels in red blood cell membranes from a trial in patients with sickle cell disease.

### Detailed description of the Figures:

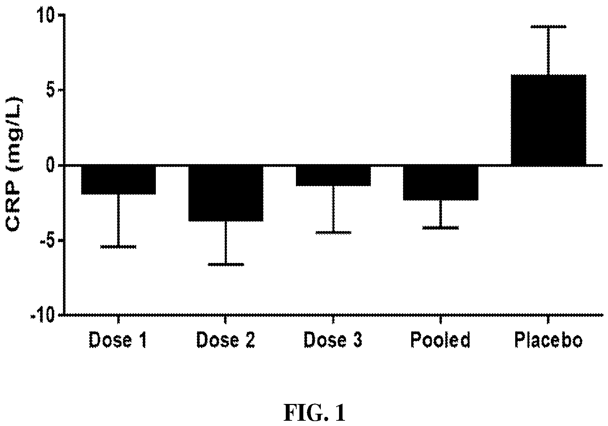

**Fig.** 1: CRP levels from a trial in patients with sickle cell disease. Baseline, corresponding to CRP levels in patients at day 0, is represented by the "0" horizontal line. The CRP levels after a 28-day trial, indicate that C-Reactive Protein, a marker of inflammation, drops at various levels when using the formulation of the invention.

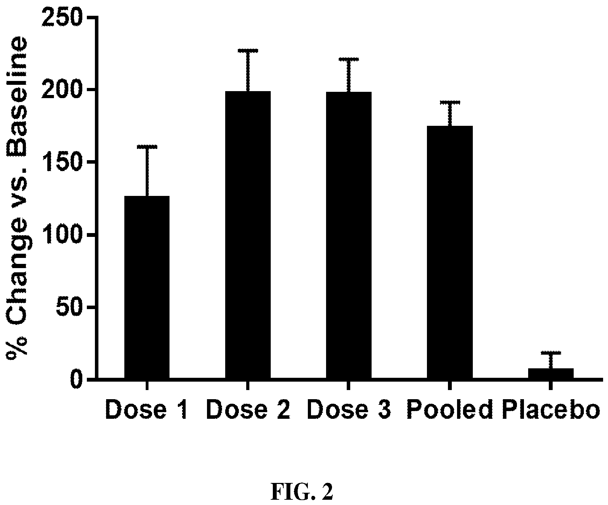

**Fig. 2****:** Percentage change from baseline for DHA levels in red blood cell membranes from a trial in patients with sickle cell disease. Shown is a percentage change over a 28-day trial, compared to levels measured at day 0. The change of DHA in the plasma membrane of red blood cells increases substantially when compared to the same measurement made at the beginning of the study.

### EXAMPLES

The following examples are non-limiting, exemplary embodiments, in accordance with the invention, that provide support for carrying out the invention and demonstrating the beneficial effects described herein.

The process is carried out as for the production of mayonnaise on a small or large scale, preferably in an inert atmosphere of N2 or CO2. In this way an oil-in-water emulsion can be produced with a high DHA content. The water used in the production process must be, as far as possible, preferably, without air and boiled under vacuum.

The emulsion is filled to the top into tubes and/or soft plastic containers that are air-resistant and collapse proportionally to the amount of preparation left after each dosage, no matter how many doses, so that no air space arises inside the container and no oxidation occurs during extended use. Alternatively, it can be filled into stiff containers, which, by using a screw or piston-like device, reduce in volume accordingly with each expressed dose of the emulsion.

The examples presented below disclose preferred precise compositions, in addition to wt% ranges for each of the components, which may be adjusted accordingly, depending on the needs of the subject.

### Example compositions:

| **Example 1** | grams | % | % range | preferred % range |
|---|---|---|---|---|
| Docosahexaenoic Acid, preferably as the triglyceride ester (DHATG) | 560 | 56.00% | 30-80 | 40-70 |
| Other fatty acids | 240 | 24.00% | 1-50 | 10-35 |
| Egg yolk | 50 | 5.00% | 0.5-25 | 1-15 |
| Lemon oil | 10 | 1.00% | 0.1-10 | 0.5-5 |
| Sugar (or artificial sweetener) | 55 | 5.50% | 0.5-20 | 2-10 |
| Salt | 10 | 1.00% | 0.01-5 | 0.1-3 |
| Citric Acid | 20 | 2.00% | 0.1-10 | 1-5 |
| Water (air-free) | 40 | 4.00% | 0.5-20 | 1-10 |
| Pepper | 10 | 1.00% | 0.01-5 | 0.1-2 |
| Preservatives | 5 | 0.50% | 0.001-2 | 0.1-1 |
| sum | 1000 | | | |
| | | | | |

| **Example 2** | grams | | % range | preferred % range |
|---|---|---|---|---|
| Docosahexaenoic Acid, preferably as the triglyceride ester (DHATG) | 560 | 56.00% | 30-80 | 40-70 |
| Other fatty acids | 240 | 24.00% | 1-50 | 10-35 |
| Egg yolk | 50 | 5.00% | 0.5-25 | 1-15 |
| Lemon oil | 5 | 0.50% | 0.1-10 | 0.2-4 |
| Sugar (or artificial sweetener) | 100 | 10.00% | 0.5-20 | 5-15 |
| Salt | 10 | 1.00% | 0.01-5 | 0.1-3 |
| Citric Acid | 20 | 2.00% | 0.1-10 | 1-5 |
| Water (air-free) | 100 | 10.00% | 0.5-20 | 5-15 |
| Pepper | 10 | 1.00% | 0.01-5 | 0.1-2 |
| Preservatives | 5 | 0.50% | 0.001-2 | 0.1-1 |
| sum | 1100 | | | |
| | | | | |

| **Example 3** | grams | | % range | preferred % range |
|---|---|---|---|---|
| Docosahexaenoic Acid, preferably as the triglyceride ester (DHATG) | 560 | 56.00% | 30-80 | 40-70 |
| Other fatty acids | 240 | 24.00% | 1-50 | 10-35 |
| Egg yolk | 50 | 5.00% | 0.5-25 | 1-15 |
| Sugar (or artificial sweetener) | 55 | 5.50% | 0.5-20 | 2-10 |
| Salt | 10 | 1.00% | 0.01-5 | 0.1-3 |
| Vinegar (eg 20%) | 10 | 1.00% | 0.01-5 | 0.1-3 |
| Citric Acid | 10 | 1.00% | 0.1-10 | 0.5-5 |
| Water (air-free) | 25 | 2.50% | 0.5-20 | 1-10 |
| Pepper | 5 | 0.50% | 0.01-5 | 0.1-1 |
| Preservatives | 5 | 0.50% | 0.001-2 | 0.1-1 |
| sum | 970 | | | |
| | | | | |

| **General Composition** | grams | % | % range | preferred % range |
|---|---|---|---|---|
| Docosahexaenoic Acid, preferably as the triglyceride ester (DHATG) | 560 | 56.00% | 30-80 | 40-70 |
| Other fatty acids | 240 | 24.00% | 1-50 | 10-35 |
| Egg yolk | 50 | 5.00% | 0.5-25 | 1-15 |
| Acidic aqueous medium | 150 | 15.00% | 0.5-30 | 10-20 |
| sum | 1000 | | | |

Also disclosed herein is Example 4:

| **Example 4** | grams | % | % range | preferred % range |
|---|---|---|---|---|
| Omega-3 fish oil (comprising 20 wt% or more DHA in the composition) | 760 | 76.00% | 70-80 | 75-78 |
| Ascorbic acid USP | 10 | 1.00% | 0.1-5 | 1.0 - 2.5 |
| Sucralose, FCC/JECFA | 1 | 0.10% | 0.001-1 | 0.01 - 0.1 |
| Sodium Ascorbate, USP | 5 | 0.50% | 0.1-5 | 0.1 - 2.0 |
| Water, process | 100 | 10.00% | 5-15 | 8.0-12.0 |
| Egg yolk, pasteurized | 100 | 10.00% | 5-15 | 8.0 - 12.0 |
| Orange flavor, natural | 10 | 1.00% | 0.1-4 | 1.0 - 3.0 |
| Non-GMO Canola oil, FCC | 5 | 0.50% | 0.01-10 | 0.1 - 1.0 |
| Citric acid anhydrous USP | 5 | 0.50% | 0.05-2 | 0.1 - 1.0 |
| Potassium sorbate FCC | 1 | 0.10% | 0.01-1 | 0.05 - 0.1 |
| Sodium benzoate FCC | 1 | 0.10% | 0.01-1 | 0.05 - 0.1 |
| Beta Carotene beadlets (10% beta carotene), EP | 1 | 0.10% | 0.001-10 | 0.01-1.0 |
| Xanthan gum, FCC | 0.5 | 0.05% | 0.001-10 | 0.01-1.0 |
| L-Menthol, USP | 0.5 | 0.05% | 0.001-10 | 0.01-1.0 |
| sum | 1000 | | | |

### Clinical Tests:

In order to assess the properties of the inventive compositions, an open label, balanced, randomized, multicenter, phase II clinical trial is carried out to determine the effect of the compositions (medical food, in the form of a mayonnaise) enriched with docosahexaenoic acid (DHA, as a triglyceride ester) on the cell membrane fatty acid ratio of blood cells of sickle cell patients, ranging in age from 6 - 40 years of age.

Employed in the trial is a DHA enriched mayonnaise, for example as described above in Example 4.

Primary Objective: To determine the percentage change in the total blood cell membrane DHA and EPA concentration from baseline and after 4 weeks of treatment.

Secondary objective: To monitor the safety and tolerability of DHA enriched food in patients with sickle cell disease.

15 Patients with sickle cell disease ranging in age from 6- 40 years of age are enrolled in the study.

A single packet of the Omega 3 DHA enriched mayonnaise is administered once a day for 28 days at ambient temperature. A single packet of "Omega 3 DHA enriched Mayonnaise" is ingested orally (eaten) either directly or mixed with a small amount of yogurt. The investigational product is administered orally in the dosage as per this protocol for a period of 28 days at one packet per day. Each packet comprises 20g mayonnaise.

Visiting and Screening Procedure
- Visit 01: Screening and enrolment (Day -1)
- Visit 02: Baseline visit (Day 0)
- Visit 03: Follow up visit (Day 01)
- Visit 04: Follow up visit (Day 08)
- Visit 05: Follow up visit (Day 15)
- Visit 06: Follow up visit (Day 22)
- Visit 07: Primary end point & end of study visit (Day 28)

Haematology, Biochemistry and serology are assessed on each day of screening. At every visit, blood pressure, radial pulse rate, oral temperature and wellbeing status are assessed and recorded before start of treatment and after completion of treatment. At the beginning and end of the therapy visit, Lipid Profile test, fatty acid ratio (AA:Total Omega-3), DHA& EPA (Total Omega-3), AA (Arachidonic acid) and C-reactive protein (CRP) are measured. The sickle cell VOC pain is assessed through VAS (Visual Analogue Scale) at every visit. Monitoring for adverse events is conducted throughout the study period.

Efficacy is evaluated as follows:
Baseline visit - Day 0, and End of therapy visit - after 4 weeks treatment (i.e. 28^{th} day).

Primary Efficacy Evaluation: Patients are evaluated by total blood cell membrane DHA, EPA and AA (Arachidonic acid) concentration at Baseline and end of therapy visit.

Secondary Efficacy Evaluation: Patients are evaluated by fatty acid ratio (AA: Total Omega-3), DHA& EPA (Total omega-3) and AA (Arachidonic acid) at end of therapy visit. C-reactive protein (CRP) levels will be evaluated at Day 0 and Day 28.

Primary end points: The percentage change in the total blood cell membrane DHA and EPA concentration from baseline after 4 weeks of treatment. To increase the DHA level above baseline and a lower ratio between AA (Arachidonic acid) and Total Omega-3.

Secondary end points: Monitoring for Safety and tolerability is carried out throughout the study period, to decrease CRP over a 28-day period, and to determine the percentage change of Lipid profile from baseline to day 28.

Systemic Bioavailability: When Omega 3 fatty acids (DHATG) are administered under fasted condition, on average the peak (Cmax) and total (AUC0-72h) exposure were lower by up to 20 to 80-fold, respectively, for total plasma EPA, and lower by up to 2 to 4-fold, respectively, for total plasma DHA, in comparison to those observed under fed condition (high-fat high-calorie meal). Therefore, Omega 3 fatty acids (DHATG) are preferably taken with food. In healthy volunteers and in patients with hypertriglyceridemia, EPA and DHA are absorbed when administered as ethyl esters orally. Omega-3-acids administered as ethyl esters induce significant, dose-dependent increases in serum phospholipid EPA content.

Methods for determining CRP levels in blood are known to a skilled person and carried out accordingly. C-reactive protein (CRP) is an acute-phase reactant synthesized by the liver and is used as a marker of inflammation. The blood (serum) CRP concentration can increase by up to 1,000-fold after infection, trauma, surgery, and other acute inflammatory events, and is elevated in subjects with chronic inflammation, such as in sickle cell subjects. Immunoassays for determining CRP levels are established in the art.

Methods for quantitatively determining fatty acids in red blood cells are known to a skilled person and carried out accordingly. For example, blood is collected tubes containing EDTA. Within 48 h of collection, RBCs are separated from the blood samples, washed with phosphate-buffered saline and stored in a -80° freezer until analysis. RBC membrane levels of e.g. EPA, DHA levels, and AA are determined using mass spectrometry analysis, for example by capillary column-negative ion mass spectrometry, and can expressed as percentage of total fatty acids. Method descriptions are, for example, available from Lagerstedt et al. (Mol. Genet. Metab. 2001;73:38-45).

The prophetic data presented in Fig. 1 show expected CRP levels to be obtained from the trial in patients with sickle cell disease. The study may or may not employ a placebo control, for example patients receiving a mayonnaise without omega 3 or DHA enrichment. Baseline, represented by the "0" horizontal line in Fig. 1 indicates CRP levels at day 0. The figure shows that C-Reactive Protein, a marker of inflammation, will drop at various levels of supplementation with the formulation used in the trial. The expected data from the trial reflects the pooled data and shows a drop from baseline (black horizontal line). The CRP levels in patients are therefore reduced, indicating a therapeutic effect.

The prophetic data presented in Fig. 2 shows the % change (at 28 days) from baseline (measured at day 0) for DHA levels in red blood cell membranes. The study may or may not employ a placebo control, for example patients receiving a mayonnaise without omega 3 or DHA enrichment, but the change of DHA in the cell membrane is expected to increase substantially, similar to Dose 1 at the very least, when compared to the same measurement made at the beginning of the study.

Thus, DHA levels enable measurement of DNA being incorporated into the red blood cell membranes and replenishing the fatty acid created by the metabolic disorder. DHA can therefore - via administration in the inventive composition - reestablish the proper balance of this essential polyunsaturated fatty acid. By doing this, the red blood cell becomes flexible, does not break, and reduces overall inflammation (noted in Fig. 1) and consequently reduces disease and/or disease symptoms. Reduced inflammation drops d-dimer levels and reduces aggregation of the red blood cells, which is a cause of the painful crisis seen in sickle cell patients.

Preliminary results from the trial, which is ongoing, are positive. At present, no patient enrolled in the trial has experienced an attack (painful crisis seen in sickle cell patients), indicating that the DHA levels are corrected, and inflammation and disease symptoms are reduced. No patients have discontinued the study, and no complaints were evident regarding administration difficulties, with respect to smell or taste of the compositions. The compositions and formulations of the invention therefore enable surprisingly enhanced DHA bioavailability in patients, in addition to providing an easy-to-administer formulation that indicates good patient compliance due to reduced unwanted smell or taste typically associated with fish oil preparations.

## Claims

1. A composition, comprising fatty acids, egg yolk and an acidic aqueous medium, wherein the composition comprises 30-80 percent docosahexaenoic acid (DHA) by weight (30-80 wt%).

2. The composition according to claim 1, wherein the composition comprises or consists of an oil-in-water emulsion.

3. The composition according to claim 2, wherein the composition is a mayonnaise, paste or has a mayonnaise-like consistency, for example suitable to be pressed or squeezed from a flexible container or tube.

4. The composition according to any one of the preceding claims, wherein the DHA comprises or consists of a triglyceride ester of docosahexaenoic acid (DHATG) or other esters of DHA, such as ethyl esters.

5. The composition according to any one of the preceding claims, comprising additional omega-3 fatty acids and/or marine oil.

6. The composition according to any one of the preceding claims, wherein the composition comprises:
a. DHA at 30-80 wt%, preferably 40-70 wt%, more preferably 45-60 wt%;
b. other fatty acids at 1-50 wt%, preferably 5-40 wt%, or 10-35 wt%, more preferably 20-30 wt% (for example omega-3 fatty acids or marine oil);
c. egg yolk at 0.5-25 wt%, preferably 1-15 wt%, more preferably 2-10 wt%; and
d. an acidic aqueous medium at 0.5-30 wt%, preferably 1-25 wt%, more preferably 2-20 wt%.

7. The composition according to the preceding claim, wherein the composition additionally comprises:
a. Lemon oil (or d-lemonine) at 0.1-10 wt%, preferably 0.5-5 wt%;
b. Sugar at 0.5-20 wt%, preferably 2-10 wt%;
c. Salt at 0.01-5 wt%, preferably 0.1-3 wt%;
d. Citric acid at 0.1-10 wt%, preferably 1-5 wt%;
e. Water at 0.5-20 wt%, preferably 1-10 wt%;
f. Pepper at 0.01-5 wt%, preferably 0.1-2 wt%; and/or
g. Preservatives at 0.001-2 wt%, preferably 0.1-1 wt%.

8. The composition according to any one of the preceding claims, wherein the composition is essentially free of micelles having an average diameter of 1-10µm and/or wherein the composition is essentially free of surfactants, such as polysorbates.

9. The composition according to any one of the preceding claims for use as a medicament in the treatment of a medical condition associated with pathologically low DHA levels.

10. The composition for use as a medicament according to the preceding claim, for the treatment of metabolic disease or a membranopathy.

11. The composition for use as a medicament according to the preceding claim, for the treatment of sickle cell disease.

12. The composition for use as a medicament according to the preceding claim, for the treatment of sickle cell disease, wherein the subject is an infant in their first year.

13. The composition for use as a medicament according to claim 11 for the treatment of sickle cell disease, wherein the treatment is administered in advance of sickle cell disease symptoms, preferably in a subject of an age below about 9 months, to prevent, or reduce the risk of, sickle cell disease occurring.

14. The composition according to any one of claims 1 to 8 for use as a medicament for the treatment of non-alcoholic fatty liver disease (NAFLD) and non-alcoholic steatohepatitis (NASH).

15. A process for the preparation of a composition according to any one of claims 1-8, comprising:
a. forming an oil-in-water emulsion comprising at least DHA at 30-80 wt%, egg yolk and acidic aqueous medium, in an amount sufficient to provide a mayonnaise-type emulsion or paste; and
b. completely filling said emulsion into a container of an airtight material.

## Patentansprüche

1. Zusammensetzung, umfassend Fettsäuren, Eigelb und ein saures wässriges Medium, wobei die Zusammensetzung 30-80 Gewichtsprozent Docosahexaensäure (DHA) (30-80 Gew.-%) umfasst.

2. Zusammensetzung nach Anspruch 1, wobei die Zusammensetzung eine Öl-in-Wasser-Emulsion umfasst oder daraus besteht.

3. Zusammensetzung nach Anspruch 2, wobei die Zusammensetzung eine Mayonnaise, Paste ist oder eine mayonnaiseähnliche Konsistenz aufweist, beispielsweise geeignet zum Pressen oder Quetschen aus einem flexiblen Behälter oder einer Tube.

4. Zusammensetzung nach einem der vorhergehenden Ansprüche, wobei die DHA einen Triglyceridester von Docosahexaensäure (DHATG) oder andere Ester von DHA, wie Ethylester, umfasst oder daraus besteht.

5. Zusammensetzung nach einem der vorhergehenden Ansprüche, umfassend zusätzliche Omega-3-Fettsäuren und/oder Seetieröl.

6. Zusammensetzung nach einem der vorhergehenden Ansprüche, wobei die Zusammensetzung Folgendes umfasst:
a. DHA zu 30-80 Gew.-%, bevorzugt 40-70 Gew.-%, mehr bevorzugt 45-60 Gew.-%;
b. andere Fettsäuren zu 1-50 Gew.-%, bevorzugt 5-40 Gew.-% oder 10-35 Gew.-%, mehr bevorzugt 20-30 Gew.-% (zum Beispiel Omega-3-Fettsäuren oder Seetieröl);
c. Eigelb zu 0,5-25 Gew.-%, bevorzugt 1-15 Gew.-%, mehr bevorzugt 2-10 Gew.-%; und
d. ein saures wässriges Medium zu 0,5-30 Gew.-%, bevorzugt 1-25 Gew.-%, mehr bevorzugt 2-20 Gew.-%.

7. Zusammensetzung nach einem der vorhergehenden Ansprüche, wobei die Zusammensetzung zusätzlich Folgendes umfasst: a. Zitronenöl (oder d-Lemonin) zu 0,1-10 Gew.-%, bevorzugt 0,5-5 Gew.-%;
b. Zucker zu 0,5-20 Gew.-%, bevorzugt 2-10 Gew.-%;
c. Salz zu 0,01-5 Gew.-%, bevorzugt 0,1-3 Gew.-%;
d. Zitronensäure zu 0,1-10 Gew.-%, bevorzugt 1-5 Gew.-%;
e. Wasser zu 0,5-20 Gew.-%, bevorzugt 1-10 Gew.-%;
f. Pfeffer zu 0,01-5 Gew.-%, bevorzugt 0,1-2 Gew.-%; und/oder
g. Konservierungsmittel zu 0,001-2 Gew.-%, bevorzugt 0,1-1 Gew.-%.

8. Zusammensetzung nach einem der vorhergehenden Ansprüche, wobei die Zusammensetzung im Wesentlichen frei ist von Mizellen ist, die einen mittleren Durchmesser von 1-10 µm aufweisen, und/oder wobei die Zusammensetzung im Wesentlichen frei ist von Tensiden, wie Polysorbaten.

9. Verbindung nach einem der vorstehenden Ansprüche zur Verwendung als Arzneimittel bei der Behandlung eines medizinischen Zustands, der mit pathologisch niedrigen DHA-Spiegeln assoziiert ist.

10. Zusammensetzung zur Verwendung als Arzneimittel nach dem vorhergehenden Anspruch zur Behandlung einer Stoffwechselkrankheit oder einer Membranopathie.

11. Zusammensetzung zur Verwendung als Arzneimittel nach einem der vorhergehenden Ansprüche zur Behandlung von Sichelzellkrankheit.

12. Zusammensetzung zur Verwendung als Medikament nach dem vorhergehenden Anspruch zur Behandlung von Sichelzellkrankheit, wobei der Patient ein Säugling im ersten Lebensjahr ist.

13. Zusammensetzung zur Verwendung als Arzneimittel nach Anspruch 11 zur Behandlung von Sichelzellkrankheit, wobei die Behandlung vor Symptomen von Sichelzellkrankheit verabreicht wird, bevorzugt an ein Subjekt im Alter von unter etwa 9 Monaten, um ein Auftreten von Sichelzellkrankheit zu verhindern oder das Risiko eines Auftretens zu verringern.

14. Zusammensetzung nach einem der Ansprüche 1 bis 8 zur Verwendung als Arzneimittel zur Behandlung von nichtalkoholischer Fettleberkrankheit (NAFLD) und nichtalkoholischer Steatohepatitis (NASH).

15. Verfahren zur Herstellung einer Zusammensetzung nach einem der Ansprüche 1-8, umfassend:
a. Bilden einer Öl-in-Wasser-Emulsion, umfassend mindestens DHA zu 30-80 Gew.-%, Eigelb und saures wässriges Medium, in einer Menge, die zum Bereitstellen einer mayonnaiseähnlichen Emulsion oder Paste ausreicht; und
b. vollständiges Einfüllen der Emulsion in einen Behälter aus einem luftdichten Material.

## Revendications

1. Composition, comprenant des acides gras, du jaune d'œuf et un milieu aqueux acide, dans laquelle la composition comprend 30 à 80 pour cent d'acide docosahexaénoïque (DHA) en poids (30 à 80 % en poids).

2. Composition selon la revendication 1, dans laquelle la composition comprend ou est constituée d'une émulsion huile dans eau.

3. Composition selon la revendication 2, dans laquelle la composition est une mayonnaise, une pâte ou a une consistance semblable à celle de la mayonnaise, par exemple adaptée pour être pressée ou écrasée à partir d'un récipient ou d'un tube flexible.

4. Composition selon l'une quelconque des revendications précédentes, dans laquelle le DHA comprend ou est constitué d'un triglycéride ester d'acide docosahexaénoïque (DHATG) ou d'autres esters de DHA, tels que des esters éthyliques.

5. Composition selon l'une quelconque des revendications précédentes, comprenant des acides gras oméga-3 supplémentaires et/ou de l'huile marine.

6. Composition pharmaceutique selon l'une quelconque des revendications précédentes, dans laquelle la composition comprend :
a. du DHA à raison de 30 à 80 % en poids, de préférence de 40 à 70 % en poids, de manière davantage préférée de 45 à 60 % en poids ;
b. d'autres acides gras à raison de 1 à 50 % en poids, de préférence de 5 à 40 % en poids, ou de 10 à 35 % en poids, de manière davantage préférée de 20 à 30 % en poids (par exemple des acides gras oméga-3 ou de l'huile marine) ;
c. du jaune d'œuf à raison de 0,5 à 25 % en poids, de préférence de 1 à 15 % en poids, de manière davantage préférée de 2 à 10 % en poids ; et
d. un milieu aqueux acide à raison de 0,5 à 30 % en poids, de préférence de 1 à 25 % en poids, de manière davantage préférée de 2 à 20 % en poids.

7. Composition selon la revendication précédente, dans laquelle la composition comprend également :
a. de l'huile de citron (ou d-citronine) à raison de 0,1 à 10 % en poids, de préférence de 0,5 à 5 % en poids ;
b. du sucre à raison de 0,5 à 20 % en poids, de préférence de 2 à 10 % en poids ;
c. du sel à raison de 0,01 à 5 % en poids, de préférence de 0,1 à 3 % en poids ;
d. de l'acide citrique à raison de 0,1 à 10 % en poids, de préférence de 1 à 5 % en poids ;
e. de l'eau à raison de 0,5 à 20 % en poids, de préférence de 1 à 10 % en poids ;
f. du poivre à raison de 0,01 à 5 % en poids, de préférence de 0,1 à 2 % en poids ; et/ou
g. des conservateurs à raison de 0,001 à 2 % en poids, de préférence de 0,1 à 1 % en poids.

8. Composition selon l'une quelconque des revendications précédentes, dans laquelle la composition est essentiellement exempte de micelles ayant un diamètre moyen de 1 à 10 µm et/ou dans laquelle la composition est essentiellement exempte de tensioactifs, tels que des polysorbates.

9. Composition selon l'une quelconque des revendications précédentes pour une utilisation comme médicament dans le traitement d'un état médical associé à des niveaux de DHA pathologiquement faibles.

10. Composition pour une utilisation comme médicament selon la revendication précédente, pour le traitement d'une maladie métabolique ou d'une membranopathie.

11. Composition pour une utilisation comme médicament selon la revendication précédente, pour le traitement de la drépanocytose.

12. Composition pour une utilisation comme médicament selon la revendication précédente, pour le traitement de la drépanocytose, dans laquelle le sujet est un nourrisson dans sa première année.

13. Composition pour une utilisation comme médicament selon la revendication 11 pour le traitement de la drépanocytose, dans laquelle le traitement est administré avant l'apparition des symptômes de la drépanocytose, de préférence chez un sujet âgé de moins d'environ 9 mois, pour prévenir ou réduire le risque d'apparition de la drépanocytose.

14. Composition selon l'une quelconque des revendications 1 à 8, pour une utilisation comme médicament pour le traitement de la stéatose hépatique non alcoolique (NAFLD) et de la stéatohépatite non alcoolique (NASH).

15. Procédé de préparation d'une composition selon l'une quelconque des revendications 1 à 8, comprenant :
a. la formation d'une émulsion huile dans eau comprenant au moins du DHA à raison de 30 à 80 % en poids, du jaune d'œuf et un milieu aqueux acide, en une quantité suffisante pour fournir une émulsion de type mayonnaise ou une pâte ; et
b. le remplissage complet d'un récipient en matériau hermétique avec ladite émulsion.
